# DEMANDE DE BREVET EUROPEEN

(11) **EP 0 925 983 A1**
(43) Date de publication de la demande: **30.06.1999**
(21) Numéro de dépôt: 98403290.4
(22) Date de dépôt: 23.12.1998
(51) Int. Cl.: B60K 11/08, F24F 13/15, F01P 7/10, E06B 7/086

(54) **Dispositif de pilotage d'un flux d'air et agencement de ce dispositif dans un bloc avant de véhicule automobile**

(30) Priorité: 24.12.1997 FR 9716526
(71) Demandeur: ECIA - EQUIPEMENTS ET COMPOSANTS POUR L'INDUSTRIE AUTOMOBILE, F-25400 Audincourt (FR)
(72) Inventeur: Lucbernet, Bruno, 25230 Seloncourt (FR); Tourret, Alain, 25200 Monbeliard (FR)
(74) Mandataire: de la Bigne, Guillaume Michel Marie

(57) **Abrégé**

Le dispositif de pilotage comporte un cadre (34) délimitant un passage du flux d'air et au moins un volet (42) monté rotatif sur deux traverses d'extrémité (36) du cadre, entre des positions d'ouverture et d'obturation du passage du flux d'air. Le volet (42) est monté rotatif également sur une traverse intermédiaire (38) du cadre (34) disposée entre les deux traverses d'extrémité (36). De préférence, la traverse intermédiaire (38) est creuse et forme un boîtier pour le logement de moyens de commande du volet (42).

## Description

La présente invention concerne un dispositif de pilotage d'un flux d'air et un agencement de ce dispositif dans un bloc avant de véhicule automobile.

On connaît déjà dans l'état de la technique un dispositif de pilotage d'un flux d'air, du type comprenant un cadre délimitant un passage du flux d'air et au moins un volet monté rotatif sur deux traverses d'extrémité de ce cadre, entre des positions d'ouverture et d'obturation du passage du flux d'air.

DE-A-38 36 374 et EP-A-0 421 098 décrivent chacun un dispositif de pilotage de ce type agencé dans un bloc avant de véhicule automobile, à proximité d'un échangeur thermique de ce bloc avant.

Le dispositif de pilotage permet notamment, après le démarrage du moteur du véhicule, d'accélérer la montée en température de ce moteur et, éventuellement, de l'air de climatisation de l'habitacle du véhicule. L'accélération de la montée en température est obtenue en fermant les volets du dispositif. La fermeture et l'ouverture de ces volets sont commandées en fonction d'un paramètre de température.

Pour résister aux déformations sous l'effet du flux d'air, les volets du dispositif de pilotage doivent être relativement rigides ce qui impose de limiter leur dimension et de les fabriquer à partir de matériaux relativement lourds, notamment métalliques.

DE-A-36 05 064 décrit un dispositif de pilotage d'un flux d'air, du type comprenant un cadre délimitant un passage du flux d'air et au moins un volet monté rotatif, d'une' part, sur deux traverses d'extrémité de ce cadre, entre des positions d'ouverture et d'obturation du passage du flux d'air, et d'autre part, sur une traverse intermédiaire du cadre disposée entre les traverses d'extrémité, de préférence de façon sensiblement équidistante des deux traverses d'extrémité.

L'invention a pour but de proposer un dispositif de pilotage de flux d'air peu encombrant, léger et efficace, ceci en limitant les pertes de charge du flux d'air traversant ce dispositif.

A cet effet, l'invention a pour objet un dispositif de pilotage d'un flux d' air du type décrit dans DE-A-36 05 064, caractérisé en ce que la traverse intermédiaire est creuse et forme un boîtier pour le logement de moyens de commande du volet comprenant une tringle de commande, montée coulissante longitudinalement dans la traverse intermédiaire, munie d'au moins une échancrure en prise avec une manivelle de commande du volet logée dans la traverse intermédiaire.

Suivant d'autres caractéristiques de ce dispositif de pilotage :
- la tringle de commande comporte des saillies de contact réduit avec la surface interne de la traverse intermédiaire ;
- le dispositif comporte un actionneur de la tringle de commande porté par la traverse intermédiaire ;
- le volet comporte deux demi-ailes reliées entre elles par la manivelle de commande ;
- le volet comporte deux tourillons intermédiaires reliés entre eux par la manivelle de commande et montés rotatifs dans des paliers intermédiaires ménagés dans la traverse intermédiaire ;
- la traverse intermédiaire comporte deux demiboîtiers, en forme générale de gouttières, accrochés entre eux par exemple par encliquetage, formant deux bords de la traverse intermédiaire respectivement d'attaque et de fuite;
- chaque palier intermédiaire est délimité par deux échancrures formant des demi-paliers ménagées respectivement sur des bords de jonction des deux demi-boîtiers ;
- les traverses d'extrémité et intermédiaire comportent chacune un bord d'attaque de section transversale profilée et arrondie, délimitée de préférence par un contour sensiblement elliptique ;
- le cadre comprend des moyens anti-écartement des traverses d'extrémité coopérant avec le volet ;
- les moyens anti-écartement comprennent une paire de crochets portés par les traverses d'extrémité destinés à coopérer avec des butées annulaires solidaires des extrémités du volet, de manière à limiter le déplacement axial des extrémités de ce volet par rapport aux traverses d'extrémité ;
- le cadre et le volet sont en plastique.

L'invention a également pour objet un agencement d'un dispositif de pilotage tel que défini ci-dessus dans un bloc avant de véhicule automobile comprenant un échangeur thermique muni d'un corps reliant deux ensembles collecteurs de liquide circulant dans l'échangeur, chaque ensemble collecteur comportant une plaque collectrice délimitée par un bord faisant saillie par rapport au corps dans la direction générale d'écoulement du flux d'air, caractérisé en ce que le cadre du dispositif de pilotage est plaqué contre l'échangeur thermique de manière que les bords saillants des plaques collectrices empiètent sur les traverses d'extrémité du cadre.

Suivant une autre caractéristique de cet agencement, l'échangeur thermique est intercalé entre le dispositif de pilotage et un groupe motoventilateur du bloc avant, et les bords `d'attaque des traverses d'extrémité et intermédiaire du cadre sont dirigés vers le corps d'échangeur.

L'invention sera mieux comprise à la lecture de la description qui va suivre donnée uniquement à titre d'exemple et faite en se référant aux dessins dans lesquels :
- la figure 1 est une vue schématique de côté d'un dispositif de pilotage d'un flux d'air selon l'invention agencé dans un bloc avant de véhicule automobile ;
- la figure 2 est une vue en perspective de l'arrière du dispositif de pilotage ;
- la figure 3 est une vue en perspective éclatée de l'avant du dispositif de pilotage ;
- la figure 4 est une vue en élévation d'un volet du dispositif de pilotage ;
- la figure 5 est une vue en coupe, à échelle agrandie, suivant la ligne 5-5 de la figure 4 ;
- les figures 6 à 10 sont des vues de dessus du volet représenté à la figure 4 montrant des étapes successives de montage de ce volet sur le cadre du dispositif de pilotage;
- la figure 11 est une vue de détail, à échelle agrandie, de la partie cerclée 11 de la figure 4 ;
- la figure 12 est une vue en coupe, à échelle agrandie, suivant la ligne 12-12 de la figure 2 ;
- la figure 13 est une vue en coupe, à échelle agrandie, suivant la ligne 13-13 de la figure 2 ;
- les figures 14 et 15 sont des vues en coupe, à échelle réduite, suivant la ligne 14-14 de la figure 12 montrant respectivement les positions d'ouverture et d'obturation des volets du dispositif de pilotage ;
- la figure 16 est une vue similaire aux figures 14 et 15 montrant de plus l'actionneur de commande des volets ;
- la figure 17 est une vue suivant la flèche 17 de la figure 16 ;
- la figure 18 est une vue en coupe, à échelle agrandie, suivant la ligne 18-18 de la figure 2.

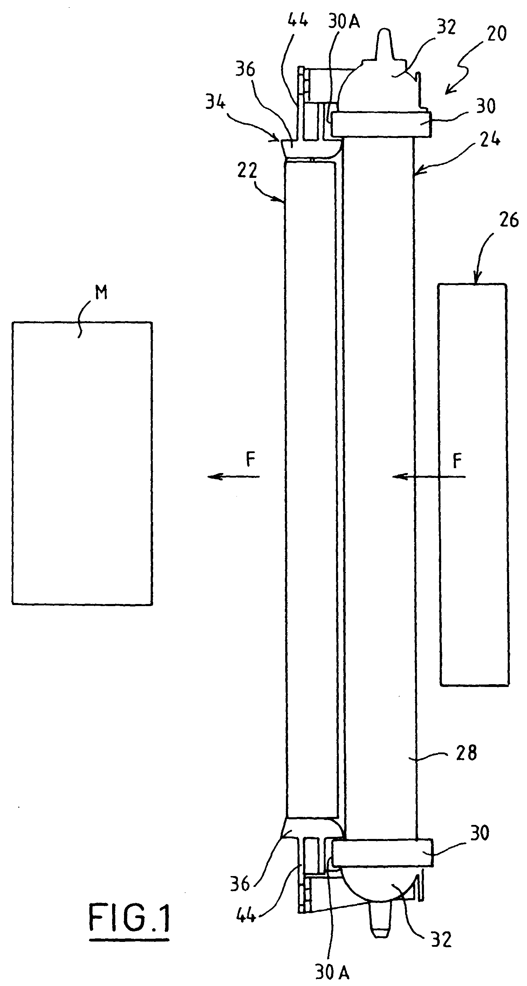

On a représenté schématiquement sur la figure 1 un bloc avant 20 de véhicule automobile comprenant, d'arrière en avant en considérant l'orientation habituelle d'un véhicule, un dispositif 22 de pilotage d'un flux d'air selon l'invention, un échangeur thermique 24 (radiateur et condenseur) et un groupe motoventilateur 26.

En variante, le dispositif de pilotage 22 pourrait être placé à un autre endroit dans le bloc avant 20, par exemple entre l'échangeur thermique 24 et le groupe motoventilateur 26.

De façon classique, l'échangeur thermique 24 est muni d'un corps 28 reliant deux ensembles collecteurs (supérieur et inférieur) de liquide circulant dans l'échangeur. Chaque ensemble collecteur comporte une plaque collectrice 30 raccordée à un boîtier collecteur 32.

Le dispositif de pilotage 22 et l'échangeur thermique 24 sont destinés à être traversés par un flux d'air dont le sens général est indiqué par les flèches F sur la figure 1.

On notera que les plaques collectrices 30 sont délimitées par un bord 30A faisant saillie dans la direction du flux d'air par rapport au corps 28 de l'échangeur.

On a également représenté schématiquement sur la figure 1 un moteur M du véhicule disposé à l'arrière du dispositif de pilotage 22.

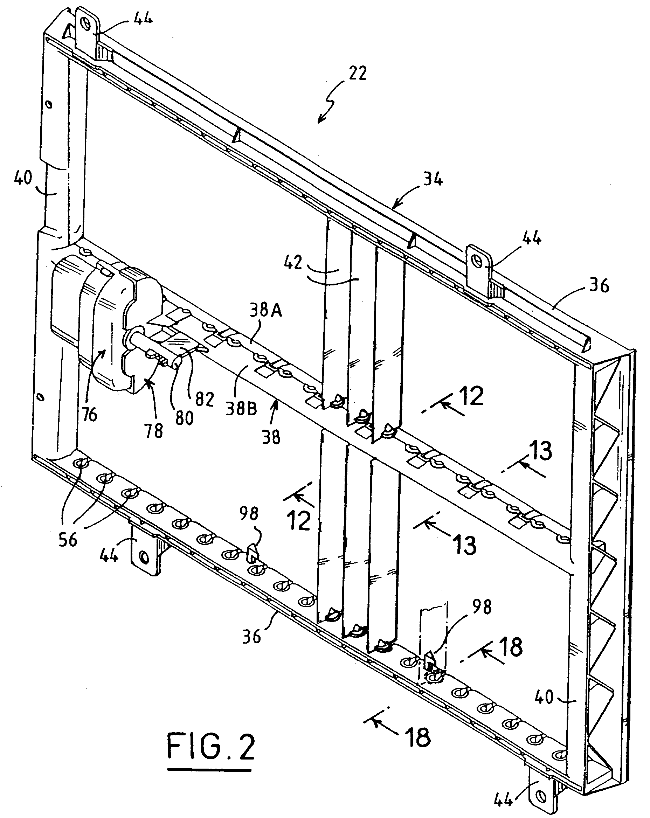

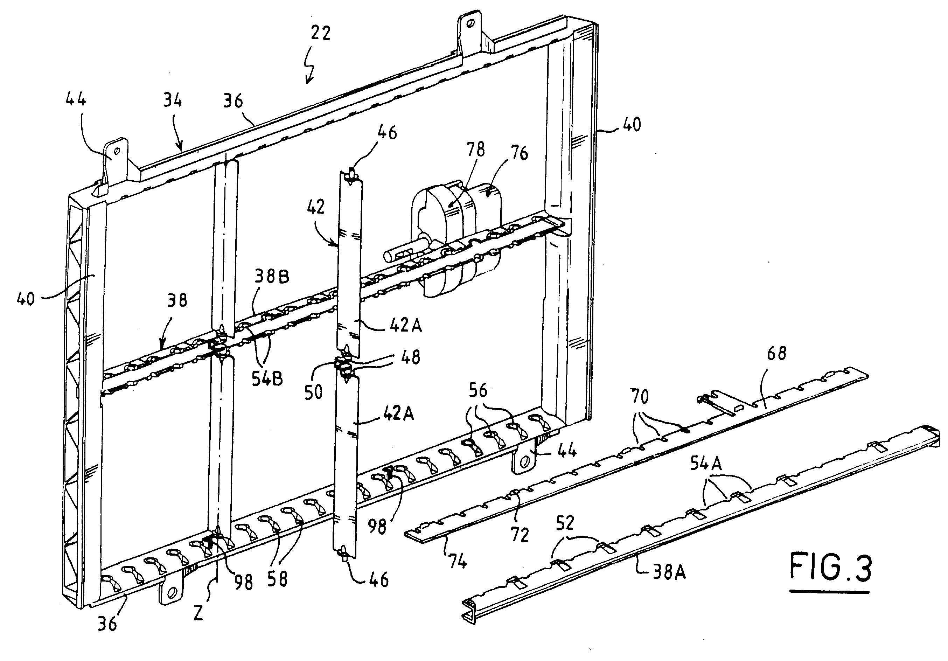

En se référant notamment aux figures 2 et 3, on voit que le dispositif de pilotage 22 comporte un cadre 34 délimitant un passage du flux d'air. Ce cadre 34 comporte deux traverses d'extrémité 36 et une traverse intermédiaire 38. Ces traverses 36,38 sont reliées entre elles par des montants latéraux 40.

La traverse intermédiaire 38 est disposée entre les deux traverses d'extrémité 36, de préférence de façon sensiblement équidistante de ces deux traverses 36.

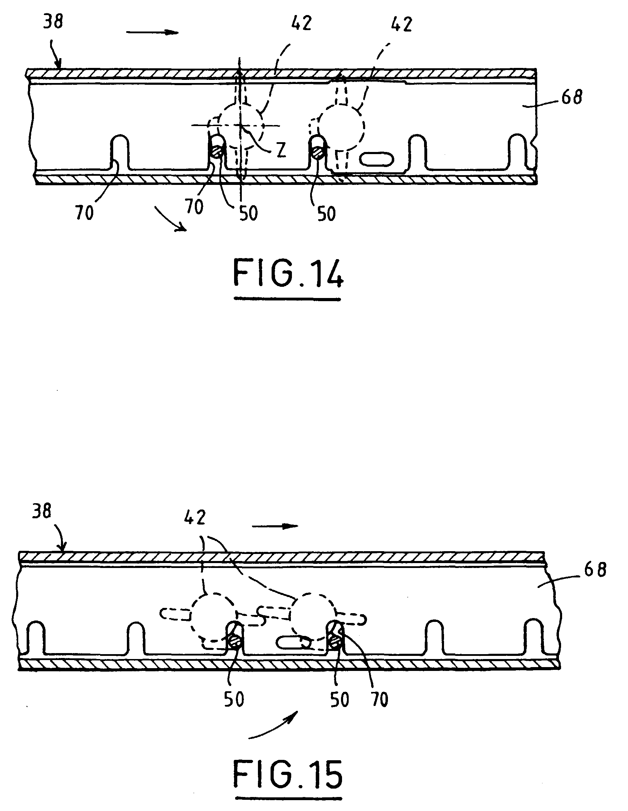

Des volets 42, dont seulement quelques uns sont représentés sur les figures 2 et 3, sont montés rotatifs autour d'axes géométriques parallèles Z sur les traverses 36,38, entre des positions d'ouverture et d'obturation du passage du flux d'air représentées notamment sur les figures 14 et 15. Les volets 42 ont des formes générales d'ailes profilées.

En se référant à nouveau à la figure 1, on voit que, dans un but de réduction d'encombrement, le cadre 34 du dispositif de pilotage 22 est plaqué contre l'échangeur thermique 24, entre les plaques collectrices 30 de ce dernier, de manière que les bords saillants 30A de ces plaques empiètent sur les traverses d'extrémité 36 du cadre.

Le cadre 34 est fixé sur l'échangeur 24 à l'aide de moyens classiques comportant notamment des pattes 44 solidaires de ce cadre 34.

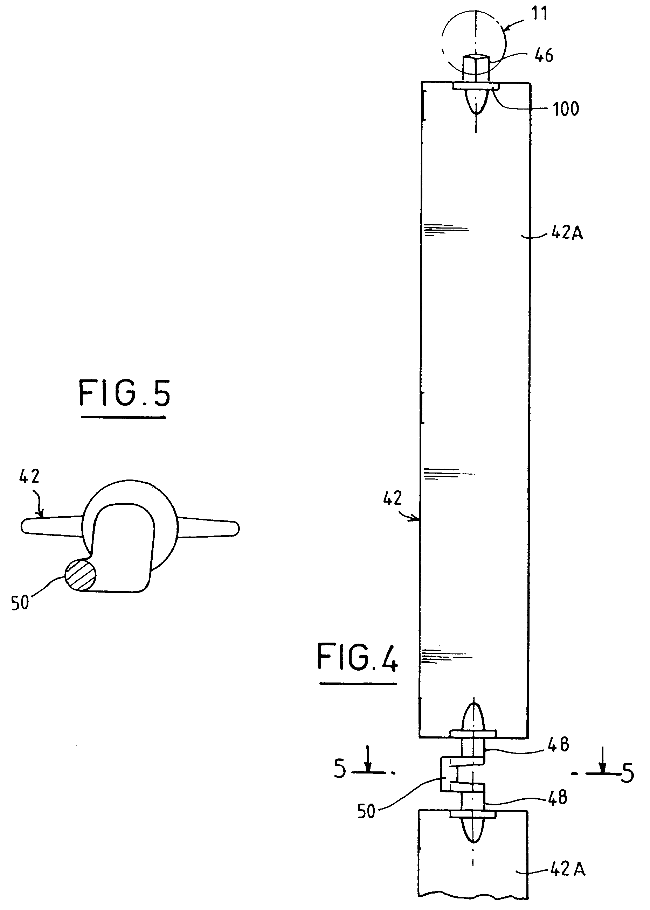

En se référant notamment aux figures 3 et 4, on voit que chaque volet 42 comporte deux tourillons d'extrémité 46, deux tourillons intermédiaires 48 reliés entre eux par une manivelle 50 de commande du volet, et deux demi-ailes profilées 42A s'étendant entre les tourillons d'extrémité 46 et intermédiaires 48.

En se référant notamment aux figures 3,12 et 13, on voit que la traverse intermédiaire 38 forme un boîtier creux. Cette traverse 38 comporte deux demi-boîtiers 38A,38B, en forme générale de gouttières, accrochés entre eux par exemple à l'aide de moyens d'encliquetage 52. Les demi-boîtiers 38A,38B forment respectivement un bord d'attaque et un bord de fuite de la traverse interne 38 en se référant au sens d'écoulement du flux d'air.

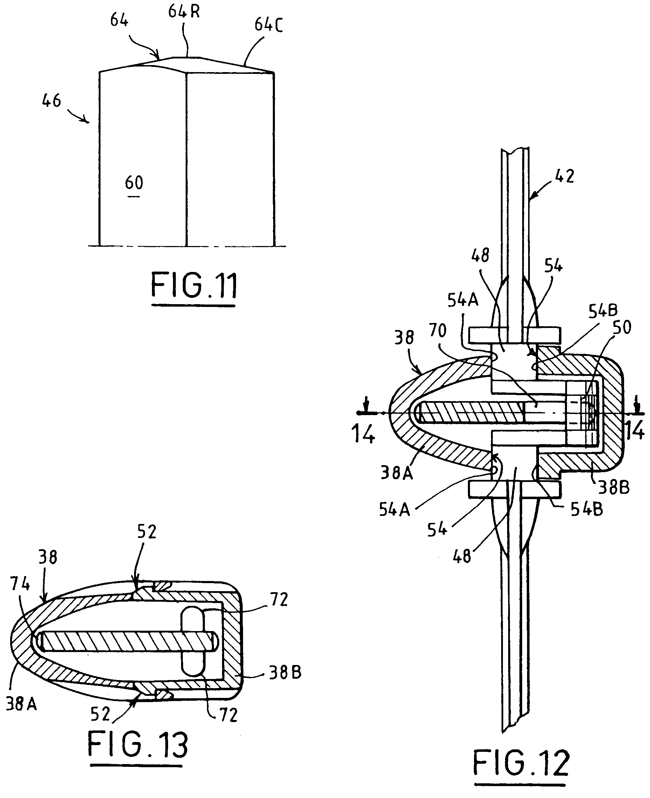

Les tourillons intermédiaires 48 des volets 42 sont logés dans des paliers intermédiaires 54 ménagés dans la traverse intermédiaire 38 (voir notamment figure 12). Chaque palier intermédiaire 54 est délimité par deux échancrures formant des demi-paliers 54A,54B ménagées respectivement sur les bords de jonction des deux demi- boîtiers 38A,38B (voir notamment figures 3 et 12).

Les tourillons d'extrémité 46 des volets sont logés dans des paliers d'extrémité 56 ménagés dans les traverses d'extrémité 36 (voir notamment figures 2 et 3).

Les tourillons 46,48 et les paliers 54,56 matérialisent l'axe géométrique Z de rotation du volet.

Les traverses d'extrémité 36 comportent des moyens d'introduction des tourillons d'extrémité 46 dans les paliers 56 correspondants par déplacement des volets perpendiculairement à leur axe de rotation Z.

Ces moyens d'introduction comprennent des gorges 58 d'accès aux paliers d'extrémité 56 ménagées dans les traverses d'extrémité 36 de manière à s'étendre sensiblement transversalement aux paliers d'extrémité 56.

Chaque tourillon d'extrémité 46 comporte deux méplats 60 sensiblement parallèles destinés à coopérer avec deux faces 62 complémentaires de la gorge d'accès 58 correspondante. On notera que ces deux faces 62 délimitent un étranglement de la gorge 58.

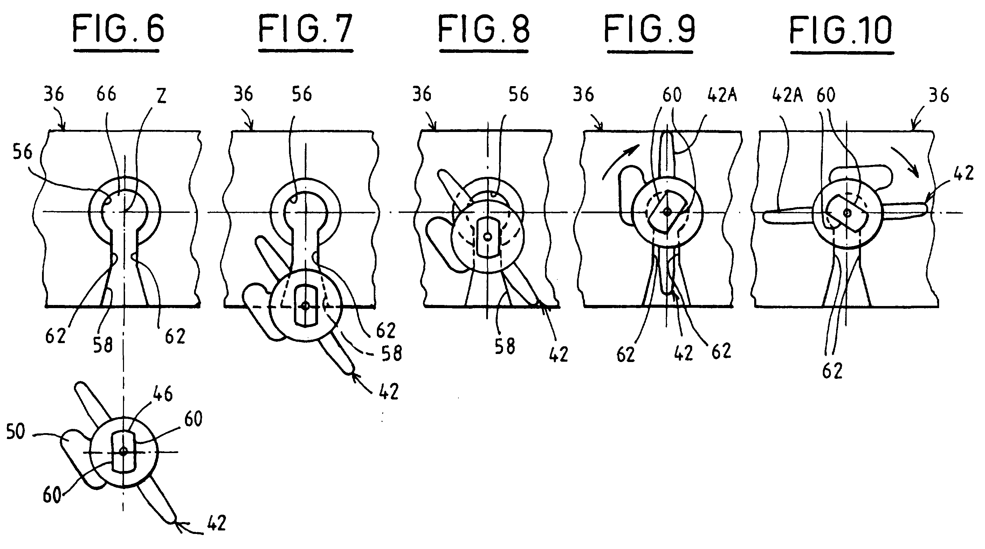

Les méplats 60 et les faces 62 complémentaires permettent, lors de l'introduction des tourillons d'extrémité 46 d'un volet dans les paliers d'extrémité 56 correspondants, de forcer l'orientation de ce volet 42 dans une position angulaire prédéterminée telle que représentée sur les figures 6 à 8. Sur ces trois figures, on a représenté les étapes successives d'introduction d'un tourillon d'extrémité 46 dans un palier 56 correspondant au cours desquelles on fait glisser ce tourillon 46 dans la gorge d'accès 58 transversalement à l'axe de rotation Z du volet correspondant.

Sur la figure 9, on a représenté le volet 42 en position d'ouverture (les demi-ailes 42A sont sensiblement parallèles au sens d'écoulement du flux d'air) et sur la figure 10 on a représenté ce volet 42 en position d'obturation (les demi-ailes 42A sont sensiblement perpendiculaires au sens d'écoulement du flux d'air). Le volet 42 est déplacé de sa position d'ouverture vers sa position d'obturation par rotation d'à peu près un quart de tour dans le sens horaire en considérant les figures 9 et 10.

On notera que la position angulaire prédéterminée du volet 42, représentée sur les figures 6 à 8, n'est jamais prise par ce volet 42 entre ses positions d'ouverture et d'obturation représentées sur les figures 9 et 10. En effet, les méplats 60 des tourillons d'extrémité 46 du volet ne sont jamais parallèles aux faces 62 des gorges d'accès 58 correspondantes lorsque ce volet tourne de sa position d'ouverture jusqu'à sa position d'obturation.

En variante, chaque tourillon d'extrémité 46 peut ne comporter qu'un seul méplat d'orientation forcée destiné à coopérer avec une face complémentaire de la gorge d'accès 58.

Les tourillons 46 et paliers 56 d'extrémité comprennent des surfaces d'appui axial complémentaires 64,66 (voir notamment figures 6 et 11). Afin de limiter les frottements entre les tourillons d'extrémité 46 et les paliers 56 correspondants, la surface d'appui axial 64 de chaque tourillon 46 est délimitée par une surface sensiblement conique 64C convergeant vers une face 64R de contact réduit avec la surface d'appui axial 66 du palier d'extrémité 56 correspondant. La surface d'appui 66 est plane comme la face de contact réduit 64R.

Les volets 42 sont commandés au moyen d'une tringle 68 montée coulissante longitudinalement dans la traverse intermédiaire 38. Cette tringle de commande 68, représentée notamment sur les figures 3 et 12 à 15, est munie d'échancrures 70 en prise avec les manivelles 50 des volets 42, ces manivelles 50 étant également logées dans la traverse intermédiaire 38.

Afin de réduire les frottements entre la traverse intermédiaire 38 et la tringle de commande 68, cette dernière est munie de saillies 72,74 de contact réduit avec la surface interne de la traverse 38 (voir notamment figure 13).

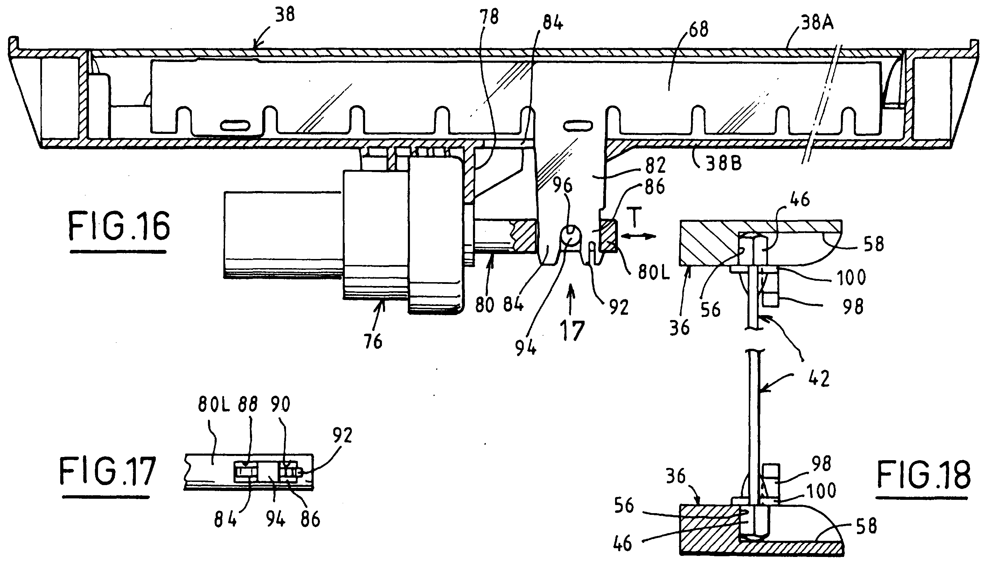

La tringle 68 est commandée par un actionneur classique 76 porté par un support 78 solidaire du bord de fuite de la traverse intermédiaire 38 (voir notamment figures 2 et 16).

L'actionneur 76 permet de déplacer en translation la tringle de commande 68 à l'intérieur de la tringle intermédiaire 38. Ce déplacement en translation est transformé en mouvement de rotation des volets 42 par coopération des manivelles 50 de ces volets et des échancrures 70 de la tringle, cette coopération produisant un mouvement relatif des manivelles 50 et des échancrures 70 sensiblement perpendiculaire à l'axe de rotation Z des volets (voir notamment figures 14 et 15 dans lesquelles les volets 42 sont représentés respectivement en position d'ouverture et d'obturation).

L'actionneur 76 est muni d'une tige 80, déplaçable en translation, reliée à la tringle 68 par l'intermédiaire de deux organes mâle et femelle décrits ci-dessous en se référant notamment aux figures 16 et 17.

L'organe mâle est une patte 82, solidaire de la tringle de commande 68, s'étendant à travers une rainure de guidage 84 ménagée dans le bord de fuite de la traverse intermédiaire 38. L'organe femelle est l'extrémité libre 80L de la tige 80.

La patte 82 comporte une extrémité libre munie de deux branches 84,86 sensiblement parallèles, emboîtées dans deux trous complémentaires 88,90 ménagés dans l'extrémité 80L de la tige 80.

On notera que les branches 84,86 s'étendent sensiblement perpendiculairement au mouvement de translation de la tige 80 qui est représentée par une double flèche T sur la figure 16.

La première branche 84 coopère avec le premier trou 88 pour transmettre de la tige 80 à la tringle de commande 68 les efforts d'entraînement sensiblement parallèles au mouvement de translation T. La seconde branche 86 porte des moyens d'encliquetage 92 coopérant avec le second trou 90 pour verrouiller entre eux la tige 80 et la patte 82. Ces moyens d'encliquetage 92 sont libérables par déformation élastique sensiblement parallèlement au mouvement de translation T.

De préférence, l'extrémité libre 80L de la tige 80 comporte une broche 94 sensiblement transversale au mouvement de translation T, séparant les deux trous 88,90 et coopérant avec une portion complémentaire 96 de la patte 82 formant une jonction des deux branches 84,86.

On notera que la première branche 84 de transmission d'efforts empêche toute déformation élastique intempestive des moyens d'encliquetage 92 pouvant conduire à la séparation accidentelle de la tige 80 et de la patte 82.

En variante, l'organe mâle pourrait être porté par la tige 80 et l'organe femelle pourrait être porté par la tringle 68.

Le montage des volets 42 et des moyens de commande de ces volets est très simple.

Initialement, le demi-boîtier 38A formant bord d'attaque de la traverse intermédiaire 38 est séparé du demiboîtier complémentaire 38B formant le bord de fuite de cette traverse intermédiaire comme cela est représenté sur la figure 3.

On place les volets 42 sur le cadre 34 en engageant, d'une part, leurs tourillons d'extrémité 46 dans les gorges d'accès 58 puis dans les paliers d'extrémité 56, comme expliqué précédemment, et d'autre part, leurs tourillons intermédiaires 48 dans les demi-paliers intermédiaires 54B ménagés sur le demi-boîtier 38B de la traverse intermédiaire.

On place ensuite la tringle 68 dans ce demi-boîtier 38B de manière que les échancrures 70 de cette tringle soient en prise avec les manivelles 50 des volets.

Puis, on ferme la traverse intermédiaire 38 en encliquetant le demi-boîtier 38A sur le demi-boîtier 38B, les manivelles 50 et la tringle de commande 68 étant ainsi logées à l'intérieur de la traverse intermédiaire 38.

Enfin, on accroche, d'une part, l'actionneur 76 sur son support 78, à l'aide de moyens classiques, notamment par encliquetage, et d'autre part, la tige 80 de l'actionneur sur la patte 82 par emboîtement des organes mâle et femelle.

De préférence, afin notamment de limiter le poids du dispositif de pilotage 22, au moins le cadre 34 et les volets 42 sont en plastique.

Pour empêcher le déboîtement accidentel des tourillons d'extrémité 46 de leurs paliers 56, par déformation élastique du cadre 34, le dispositif de pilotage 22 est muni de moyens anti-écartement des traverses d'extrémité 36.

Ces moyens anti-écartement comprennent, par exemple comme cela est représenté notamment sur les figures 2 et 18, au moins une paire de crochets 98 portés par les traverses d'extrémité 36. Ces crochets 98 sont destinés à coopérer avec des butées annulaires 100 solidaires des extrémités d'un même volet 42, de manière à limiter le déplacement axial des tourillons d'extrémité 46 de ce volet par rapport aux paliers 56 correspondants.

Afin de réduire les pertes de charge du flux d'air traversant le dispositif de pilotage 22, les traverses d'extrémité 36 et intermédiaire 38 comportent chacune un bord d'attaque de section transversale profilée et arrondie, délimitée de préférence par un contour sensiblement elliptique, comme cela est représenté notamment sur les figures 12,13 et 18. Ces bords d'attaque sont bien entendu dirigés vers le corps 28 de l'échangeur thermique (voir notamment figure 1).

De préférence, les bords d'attaque des montants 40 du cadre sont profilés de façon similaire aux traverses 36,38.

Parmi les avantages de l'invention on notera les suivants.

Les paliers intermédiaires portés par la traverse intermédiaire forment des moyens d'appui et de guidage en rotation des volets limitant efficacement la déformation de ces derniers sous l'effet de l'écoulement de l'air. Les volets peuvent donc être fabriqués dans un matériau léger, tel que le plastique, sans déformation notable de ces derniers.

De plus, la traverse intermédiaire rigidifiant les volets, on peut diminuer l'épaisseur de ces volets et par conséquent réduire les pertes de charge qu'ils engendrent lorsqu'ils sont en position d'ouverture.

Par ailleurs, la tringle intermédiaire creuse forme avantageusement un logement pour les moyens de commande des volets en évitant ainsi qu'ils perturbent le flux d'air traversant le cadre et qu'ils n'engendrent des pertes de charges supplémentaires.

Enfin, les bords d'attaque des traverses d'extrémité et intermédiaire de section transversale profilée arrondie limitent efficacement les pertes de charge du flux d'air traversant le cadre ainsi que les bruits provoqués par ce flux au contact du cadre.

## Revendications

1. Dispositif de pilotage d'un flux d'air, du type comprenant un cadre (34) délimitant un passage du flux d'air et au moins un volet (42) monté rotatif, d'une part, sur deux traverses d'extrémité (36) de ce cadre, entre des positions d'ouverture et d'obturation du passage du flux d'air, et d'autre part, sur une traverse intermédiaire (38) du cadre (34) disposée entre les traverses d'extrémité (36), de préférence de façon sensiblement équidistante des deux traverses d'extrémité (36), **caractérisé en ce que** la traverse intermédiaire (38) est creuse et forme un boîtier pour le logement de moyens (50,68) de commande du volet (42) comprenant une tringle de commande (68), montée coulissante longitudinalement dans la traverse intermédiaire (38), munie d'au moins une échancrure (70) en prise avec une manivelle (50) de commande du volet (42) logée dans la traverse intermédiaire (38).

2. Dispositif selon la revendication 1, caractérisé en ce que la tringle de commande (68) comporte des saillies (72,74) de contact réduit avec la surface interne de la traverse intermédiaire (38).

3. Dispositif selon la revendication 1 ou 2, caractérisé en ce qu'il comporte un actionneur (76) de la tringle de commande (68) porté par la traverse intermédiaire (38).

4. Dispositif selon l'une quelconque des revendications 1 à 3, caractérisé en ce que le volet (42) comporte deux demi-ailes (42A) reliées entre elles par la manivelle de commande (50).

5. Dispositif selon l'une quelconque des revendications 1 à 4, caractérisé en ce que le volet (42) comporte deux tourillons intermédiaires (48) reliés entre eux par la manivelle de commande (50) et montés rotatifs dans des paliers intermédiaires (54) ménagés dans la traverse intermédiaire (38).

6. Dispositif selon l'une quelconque des revendications 1 à 5, caractérisé en ce que la traverse intermédiaire (38) comporte deux demi-boîtiers (38A,38B), en forme générale de gouttières, accrochés entre eux par exemple par encliquetage, formant deux bords de la traverse intermédiaire (38) respectivement d'attaque et de fuite.

7. Dispositif selon les revendications 5 et 6 prises ensemble, caractérisé en ce que chaque palier intermédiaire (54) est délimité par deux échancrures formant des demipaliers (54A,54B) ménagées respectivement sur des bords de jonction des deux demi-boîtiers (38A,38B).

8. Dispositif selon l'une quelconque des revendications précédentes, caractérisé en ce que les traverses d'extrémité (36) et intermédiaire (38) comportent chacune un bord d'attaque de section transversale profilée et arrondie, délimitée de préférence par un contour sensiblement elliptique.

9. Dispositif selon l'une quelconque des revendications précédentes, caractérisé en ce que le cadre (34) comprend des moyens (98,100) anti-écartement des traverses d'extrémité (36) coopérant avec le volet (42).

10. Dispositif selon la revendication 9, caractérisé en ce que les moyens anti-écartement comprennent une paire de crochets (98) portés par les traverses d'extrémité (36) destinés à coopérer avec des butées annulaires (100) solidaires des extrémités du volet (42), de manière à limiter le déplacement axial des extrémités de ce volet (42) par rapport aux traverses d'extrémité (36).

11. Dispositif selon l'une quelconque des revendications précédentes, caractérisé en ce que le cadre (34) et le volet (42) sont en plastique.

12. Agencement d'un dispositif de pilotage selon l'une quelconque des revendications précédentes dans un bloc avant de véhicule automobile comprenant un échangeur thermique (24) muni d'un corps (28) reliant deux ensembles collecteurs de liquide circulant dans l'échangeur, chaque ensemble collecteur comportant une plaque collectrice (30) délimitée par un bord (30A) faisant saillie par rapport au corps (28) dans la direction générale d'écoulement du flux d'air, **caractérisé en ce que** le cadre (34) du dispositif de pilotage est plaqué contre l'échangeur thermique (30) de manière que les bords saillants (30A) des plaques collectrices empiètent sur les traverses d'extrémité (36) du cadre (34).

13. Agencement selon la revendication 12 d'un dispositif de pilotage selon la revendication 10, caractérisé en ce que l'échangeur thermique (24) est intercalé entre le dispositif de pilotage (22) et un groupe motoventilateur (24) du bloc avant, et en ce que les bords d'attaque des traverses d'extrémité (36) et intermédiaire (38) du cadre (34) sont dirigés vers le corps d'échangeur (28).
